# DEMANDE DE BREVET EUROPEEN

(11) **EP 3 505 777 A1**
(43) Date de publication de la demande: **03.07.2019**
(21) Numéro de dépôt: 18215906.1
(22) Date de dépôt: 26.12.2018
(51) Int. Cl.: F16B 1/00, B60R 13/04

(54) **PIÈCE D ASPECT DE CARROSSERIE À INSERT DE FIXATION EN MATÉRIAU À MÉMOIRE DE FORME**

(30) Priorité: 26.12.2017 FR 1763209
(71) Demandeur: Compagnie Plastic Omnium, 69007 Lyon (FR)
(72) Inventeur: Grando, Jérôme, 38390 Vertrieu (FR); Brizin, Jérôme, 01100 Arbent (FR); Flamant, Jean-Luc, 01640 Saint-Jean-le-Vieux (FR)
(74) Mandataire: LLR

(57) **Abrégé**

- L'invention concerne une pièce d'aspect de carrosserie (10) de véhicule automobile, comportant une face extérieure (20) et une face intérieure (30), la face extérieure (20) étant destinée à être visible depuis l'extérieur du véhicule, la face intérieure (30) étant configurée pour être assemblée à une seconde pièce, caractérisée en ce que la pièce (10) comporte au moins un insert (40) surmoulé en matériau à mémoire de forme, ledit insert (40) étant du type agrafe.

## Description

La présente invention concerne le domaine de l'industrie automobile et plus précisément le domaine de l'assemblage de pièces automobiles en matière plastique.

Différentes solutions ont déjà été proposées pour fixer entre elles deux pièces en matière plastique de carrosserie, l'une étant une pièce d'aspect extérieur, l'autre étant soit son support soit une pièce apportant une fonctionnalité sur la face interne de la pièce d'aspect. Par exemple, il peut ainsi s'agir d'un support de capteur, ou d'un renfort de crosse fixés sur la face interne d'une peau de parechoc, ou d'une doublure de hayon servant à fixer une peau de becquet aérodynamique. Les solutions connues utilisent seules ou en combinaisons des rivets, des vis, des clips, et des procédés de collage ou de soudure.

Toutes ces solutions doivent être mises en oeuvre de façon à respecter les exigences sur la qualité visuelle de la pièce d'aspect extérieur, en évitant notamment des défauts inhérents au type de fixation utilisé, comme les retassures issues de parois internes moulées ou les têtes de vis apparentes, moyens de fixation apparents.

On connaît par exemple des becquets arrières constitués d'une peau extérieure fixée sur une doublure intérieure avec un collage ou une soudure, ou au moyen d'agrafes. Par exemple, pour mettre en oeuvre des agrafes, la peau et la doublure comportent des nervures obtenues lors du moulage, les nervures de la peau d'aspect étant situées sur la face intérieure, et formant des paires de nervures contiguës. Ces nervures sont agrafées l'une avec l'autre afin de solidariser les deux pièces (peau et doublure) du becquet.

La présence de nervures venues de moulage sur la face interne de la peau d'aspect, et nécessaires à l'agrafage, peut engendrer des défauts d'aspect bien connus, dits de retassure. Les exigences de qualité vis-à-vis de ce type de défauts conduisent à de fortes contraintes sur la position et la taille des nervures.

Par ailleurs, l'agrafage constitue un procédé qui peut être difficile à mettre en oeuvre selon la forme, taille ou courbure des pièces. En effet, la tête d'agrafage peut s'avérer être trop encombrante pour accéder à de petites nervures ou aux zones où les nervures d'agrafage ont dû être positionnées. Pour remédier à cette difficulté il est possible de réaliser des nervures plus hautes, mais cela accentue les défauts de retassure.

Enfin, la pose classique d'une agrafe en prise sur deux nervures contiguës, consiste à replier les pattes de l'agrafe sur les faces externes des nervures en plaquant et fixant ainsi les deux nervures l'une contre l'autre. La solidité requise pour la fixation de pièces de carrosserie implique de replier les pointes de l'agrafe jusqu'à obtenir un poinçonnage de l'agrafe sur nervures. Ce poinçonnage est à l'origine d'une contrainte forte, brutale et locale exercée par les pointes de l'agrafe perforant les nervures et pouvant conduire à fragiliser ou à fendre les nervures et ainsi rendre la fixation inopérante ou à rebuter les pièces assemblées.

L'invention a pour but de remédier à ces inconvénients en fournissant une pièce d'aspect de carrosserie extérieure munie d'au moins un insert surmoulé en matériau à mémoire de forme formant un dispositif de fixation du type agrafe, dont la mise en oeuvre pour assembler une seconde pièce sur la pièce d'aspect ne nécessite pas d'étape de poinçonnage néfaste à la structure des zones de fixation, et permet de s'affranchir de l'utilisation de nervures de fixation.

Ainsi, l'invention concerne une pièce d'aspect de carrosserie de véhicule automobile, comportant une face extérieure et une face intérieure, la face extérieure étant destinée à être visible depuis l'extérieur du véhicule, la face intérieure étant configurée pour être assemblée à une seconde pièce, dans lequel la face intérieure comporte au moins un insert en matériau à mémoire de forme, ledit insert étant du type agrafe.

La présence d'un tel insert surmoulé dans la pièce d'aspect permet la fixation d'une seconde pièce en vis-à-vis de la pièce d'aspect sans effort et sans outils spécifique. L'activation de l'insert permet ensuite de modifier sa géométrie de façon telle qu'il maintient en position la seconde pièce.

La pièce d'aspect peut en outre comporter l'une ou plusieurs des caractéristiques suivantes, prises seules ou en combinaison :
- l'insert comporte un corps formant une surface munie d'au moins une patte, le corps étant au moins en partie surmoulé dans l'épaisseur de la face intérieure de la pièce d'aspect, et la patte étant saillante par rapport à ladite face intérieure ;
- le corps comporte des ergots d'ancrage dans la face intérieure ;
- l'insert est réalisé dans un matériau différent de celui du reste de la pièce.
- l'insert possède :
   - une première configuration permettant un positionnement l'insert sans effort d'assemblage, lorsque l'insert est soumise à une première condition prédéterminée ; et
   - une seconde configuration générant des contraintes de serrage lorsque l'insert est soumis à une seconde condition prédéterminée, différente de la première condition ;
- la première condition correspond à soumettre l'insert à une température T1, de préférence une température inférieure à -40°C, et la seconde condition correspond à soumettre l'insert à une température T2, avec T1<T2, de préférence T2 correspondant une température ambiante ;
- l'extrémité distale de la patte comporte un angle vif et/ou une forme pointue, apte à pénétrer dans la matière au niveau du serrage ;

L'invention concerne également un ensemble d'une pièce d'aspect selon l'invention, et d'une seconde pièce, les deux pièces étant assemblées l'une à l'autre au moyen de l'insert en matériau à mémoire de forme.

Selon l'invention, l'insert peut comporter un corps formant une surface munie d'au moins une patte, et la seconde pièce comporte une paroi munie d'un orifice, la patte traversant l'orifice, et comportant un coude exerçant une force de serrage sur la paroi.

L'invention concerne également un procédé de fabrication d'un ensemble selon l'invention, dans lequel on réalise les étapes suivantes :
- on applique la première condition à l'insert ;
- on fabrique la pièce d'aspect par un procédé de moulage tout en surmoulant au moins partiellement l'insert ;
- on positionne l'insert en regard d'au moins un organe de fixation de la pièce à assembler ;
- on applique la seconde condition à l'insert.

L'invention concerne également un procédé de fabrication d'un ensemble selon l'invention, dans lequel on réalise les étapes suivantes :
- on applique la seconde condition à l'insert ;
- on fabrique la pièce d'aspect par un procédé de moulage tout en surmoulant au moins partiellement l'insert ;
- on applique la première condition à l'insert ;
- on positionne l'insert en regard d'au moins un organe de fixation de la pièce à assembler ;
- on applique la seconde condition à l'insert.

Selon l'un ou l'autre de ces procédés on peut réaliser les étapes suivantes :
- on applique la première condition à l'insert en appliquant une température T1 à l'insert, de préférence une température T1 inférieure à -40°C ; et
- on applique la seconde condition à l'insert, en appliquant une température T2 à l'insert, avec T1<T2, de préférence la température T2 correspond à une température ambiante.

L'invention sera mieux comprise à la lecture des figures annexées, qui sont fournies à titre d'exemples et ne présentent aucun caractère limitatif, dans lesquelles :
- la figure 1 illustre un exemple de pièce d'aspect selon l'invention ;
- la figure 2 illustre un exemple d'ensemble selon l'invention, comportant une pièce d'aspect comportant un insert de fixation et une seconde pièce assemblée grâce à l'insert.
- la figure 3 illustre un second exemple d'ensemble selon l'invention, dans lequel l'insert de la pièce d'aspect comporte des ergots d'accroche dans la pièce d'aspect ;
- les figures 4A à 4B illustrent un exemple d'insert dans une configuration de positionnement (figure 4A) et dans une configuration de maintien (figure 4B) ;
- la figure 5 illustre un exemple d'insert dont la partie distale est munie de moyens pour pénétrer dans la matière plastique de la pièce à fixer.

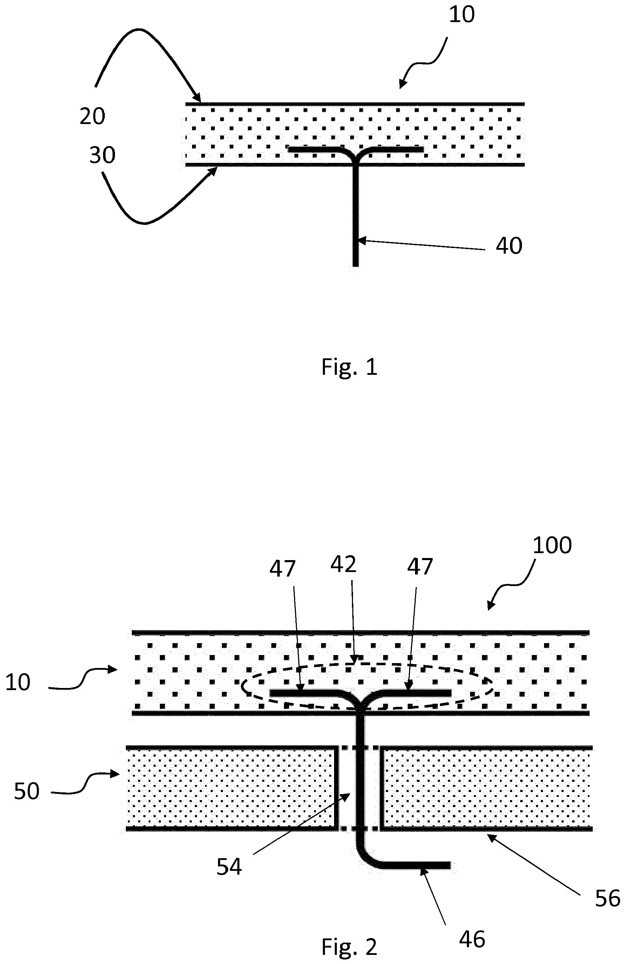

On se réfère maintenant à la figure 1 qui illustre un exemple de pièce d'aspect de carrosserie 10 de véhicule automobile selon l'invention.

La pièce d'aspect de carrosserie 10 de véhicule automobile comporte une face extérieure 20 destinée à être visible depuis l'extérieur du véhicule. La pièce 10 comporte également une face intérieure 30, opposée à la face extérieure 20, configurée pour être assemblée à une seconde pièce 50. Comme l'illustre la figure 2, la pièce 50 est destinée à ne pas être visible depuis l'extérieur du véhicule

La face intérieure 30 comporte au moins un insert 40 en matériau à mémoire de forme. L'insert 40 est réalisé en matériau à mémoire de forme. Il permet d'assembler l'une à l'autre les deux pièces 10 et 50.

L'insert 40 est au moins partiellement surmoulé dans la pièce d'aspect 10, une peau de becquet par exemple, par un procédé de moulage par injection de matière thermoplastique, ou par un procédé de moulage par compression de matière thermodurcissable.

L'insert est réalisé dans un matériau différent de celui du reste de la pièce.

L'insert 40 est du type agrafe : il comporte un corps 42 formant une surface munie d'au moins une patte 46. Le corps 42 est au moins partiellement surmoulé dans la pièce d'aspect 10, et la patte 46 est saillante par rapport à la face intérieure 30.

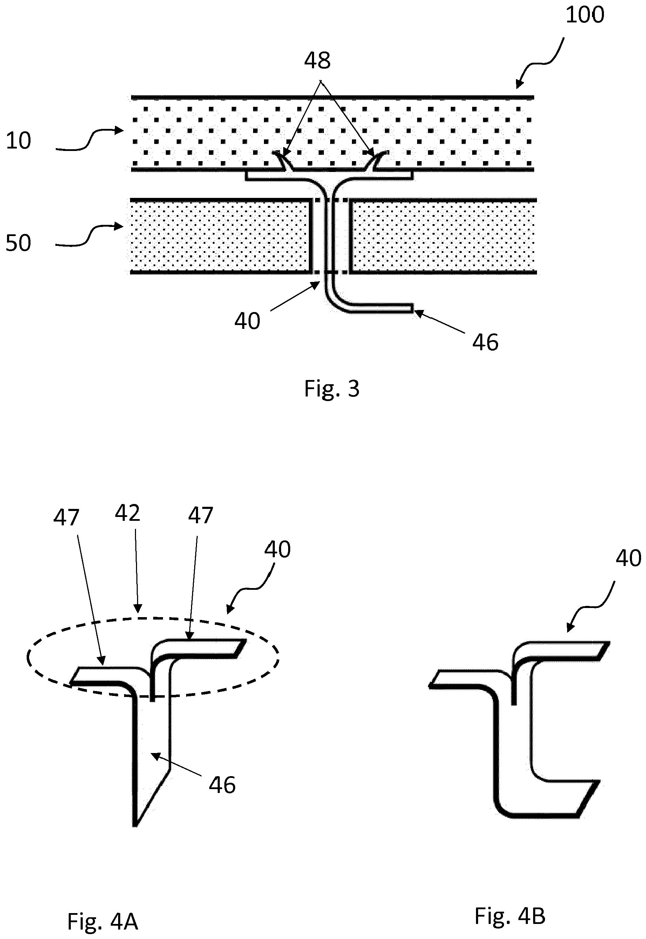

Selon un mode de réalisation (figure 3), le corps 42 comporte des moyens d'ancrage du corps 42 dans la matière plastique de la pièce 10. Ces moyens d'ancrage peuvent être des ergots 48 (figure 3), des trous à travers desquels passe la matière plastique lors du surmoulage, des reliefs... Ces moyens permettant de façon générale un meilleur ancrage de l'insert 40 dans la pièce 10.

Grâce à l'utilisation d'un matériau à mémoire de forme, l'insert 40 peut prendre au moins deux configurations différentes. Une configuration se caractérise par la position des pattes 46 par rapport au corps 42. On passe d'une configuration à une autre par une activation du matériau à mémoire de forme :
- une première configuration de positionnement, permet un positionnement de l'insert 40 sans effort d'assemblage, par exemple en donnant à la patte 46 une forme permettant son insertion aisée dans l'orifice 54 (redressement de la patte 46), et/ou en donnant une souplesse à la patte 46 ;
- une seconde configuration de maintien, permettant de maintenir, de bloquer en position assemblée la pièce 50.

Pour passer d'une configuration à une autre, on change les conditions auxquelles est soumis l'insert 40 :
- sous l'effet d'au moins une première condition prédéterminée l'insert 40 est dans une première configuration;
- sous l'effet d'au moins une seconde condition prédéterminée, différente de la première condition, l'insert 40 est dans une seconde configuration.

La seconde condition est choisie parmi des conditions de fonctionnement du véhicule, afin que l'insert 40 soit en permanence dans sa configuration de maintien pendant la vie du véhicule.

La première condition de positionnement de l'insert 40, est choisie parmi des conditions que l'insert sur le véhicule ne devrait pas rencontrer lors de son utilisation normale.

La condition peut être modifiée au moyen de différentes sources d'énergie. Selon un exemple de réalisation avantageux, décrit ci-après, on utilise un matériau à mémoire de forme activable par changement de température.

Ainsi, selon un mode de réalisation, la première condition correspond à soumettre l'insert 40 à une température T1, et la seconde condition correspond à soumettre l'insert 40 à une température T2, avec T1<T2.

Selon un exemple de réalisation, la première condition correspond à soumettre l'insert 40 à une température inférieure à -40°C, et la seconde condition correspond à soumettre l'insert 40 à une température ambiante (généralement comprise entre -20°C à +50°C).

Le matériau à mémoire de forme est un alliage Nickel/Titane. La proportion de nickel et de titane dans le matériau à mémoire à forme détermine la température de transition d'une configuration à une autre. Ainsi, le spécialiste saura définir la proportion adaptée à son utilisation.

Selon un autre exemple, la première condition correspond à une condition mécanique : on applique une force mécanique afin de déformer la patte 46, et la rendre rectiligne (figure 4A). Au contraire, lorsque l'insert 40 est dans sa seconde configuration, la patte 46 réaliser un coude (figure 4B), permettant de maintenir la pièce 50 et la pièce 20 assemblées l'une à l'autre. L'insert 40 peut ainsi plaquer et serrer la pièce 50 contre la pièce 10. Mais selon un autre mode de réalisation, un jeu est laissé entre les deux pièces.

L'insert 40 thermoactivable peut se présenter sous différentes géométries :
- le corps 42 de l'insert 40 peut être muni d'une seule patte 46 formant une languette (figures 1 à 4B) ;
- le corps 42 de l'insert 40 peut être muni de plusieurs pattes 46 formant des griffes.

Le but de la patte 46 est d'exercer une force de blocage sur au moins une partie d'un organe de fixation de la pièce à fixer 50. L'organe de fixation peut être :
- une nervure de fixation ; la patte 46 exerce alors une force de blocage sur une partie de cette nervure ;
- un ensemble comportant un orifice 54 et une paroi 56 de la pièce 50, comme illustré sur les figures 2 et 3 ; la patte 46 traverse l'orifice 54 (première configuration), et exerce une force de blocage sur la paroi 56 (seconde configuration).

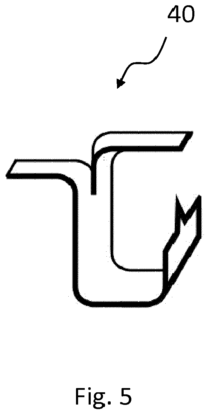

De façon avantageuse, afin de lutter contre un effort d'arrachement, qui désolidariserait les pièces 10 et 50, les extrémités distales des pattes 46 sont destinées à pénétrer dans la matière d'une paroi de l'organe de fixation de la pièce à fixer 50. Ainsi, et de façon avantageuse, les extrémités distales des pattes 46 comportent un angle vif et/ou une forme pointue (voir figure 5).

Selon un autre mode de réalisation, la patte 46 forme une languette, et la languette comporte sur une de ses faces destinées à exercer une force de serrage sur la pièce 50, des ergots afin de pénétrer dans la matière d'une paroi de l'organe de fixation de la pièce à fixer 50.

Le but de la patte 46 une fois repliée (figures 2, 3, 4B et 5) est d'exercer une force de blocage sur un organe de fixation de la pièce à fixer 50. L'organe de fixation peut être une nervure.

**Selon le mode de réalisation illustré sur les** **figures 4A et 4B****,** l'insert 40 forme une plaquette en matériau à mémoire de forme, entaillée partiellement selon la longueur de la plaquette, permettant de réaliser deux languettes proximales 47, formant le corps 42 de l'insert 40. Comme l'illustrent les figures 4A et 4B, chaque languettes proximales 47 est courbée à l'opposée l'une de l'autre. L'insert 40 possède alors une forme globalement en T, le bas du T formant une patte 46 (figure 4A).

La patte 46 est déformée, de façon à ce que la patte 46 forme un coude, courbé sensiblement parallèlement à la paroi 56 de la pièce 50 (figure 3 ou 4B).

Cette position de la patte 46 correspond à la seconde configuration de l'insert 40 en matériau à mémoire de forme.

**L'invention concerne également un ensemble 100** (figures 2 et 3) d'une pièce d'aspect 10 selon l'invention, et d'une pièce à assembler 50, les deux pièces 10 et 50 étant assemblées l'une à l'autre au moyen d'au moins un insert 40 de la pièce d'aspect 10.

De façon préférentielle, les deux pièces 10 et 50 sont réalisées en matière plastique. La pièce d'aspect 50 peut être le support de la pièce d'aspect 10, ou une pièce apportant une fonctionnalité sur la face interne de la pièce d'aspect 10. La pièce 50 peut ainsi être, par exemple :
- un support de capteur ; ou
- un renfort de crosse fixé sur la face interne d'une peau de parechoc ; ou
- une doublure de hayon servant à fixer une peau de becquet aérodynamique.

Selon un mode de réalisation, illustré sur les figures 2 et 3, l'organe de fixation de la pièce 50 est un ensemble comportant un orifice 54 et une paroi 56. Comme illustré sur les figures 2 et 3, la patte 46 traverse l'orifice 54, et exerce une force de blocage sur la paroi 56.

**L'invention concerne également un procédé de fabrication** d'un ensemble 100 selon l'invention, comportant une pièce d'aspect 10 selon l'invention et une pièce 50 à assembler.

Selon un premier mode de réalisation, le procédé comporte les étapes suivantes :
- on applique la première condition à l'insert 40 ;
- on fabrique la pièce d'aspect 10 par un procédé de moulage tout en surmoulant au moins partiellement l'insert 40 ;
- on positionne l'insert 40 en regard d'au moins un organe de fixation de la pièce 50 à assembler ;
- on applique la seconde condition à l'insert 40.

Selon un second mode de réalisation, le procédé comporte les étapes suivantes :
- on applique la seconde condition à l'insert 40 ;
- on fabrique la pièce d'aspect 10 par un procédé de moulage tout en surmoulant au moins partiellement l'insert 40 ;
- on applique la première condition à l'insert 40 ;
- on positionne l'insert 40 en regard d'au moins un organe de fixation de la pièce 50 à assembler ;
- on applique la seconde condition à l'insert 40.

Selon un exemple de réalisation de l'un ou l'autre de ces modes de réalisation du procédé :
- on applique la première condition à l'insert 40 en appliquant une température T1 à l'insert 40, de préférence une température T1 inférieure à -40°C ; et
- on applique la seconde condition à l'insert 40, en appliquant une température T2 à l'insert 40, avec T1<T2, de préférence la température T2 correspond à une température ambiante.

On peut fabriquer la pièce d'aspect 10 par un procédé de moulage par injection de matière thermoplastique, ou par un procédé de moulage par compression de matière thermodurcissable.

Enfin, on peut également réaliser en sus, une opération de collage des deux pièces 10 et 50.

### NOMENCLATURE

- 10: : pièce d'aspect destinée à être visible depuis l'extérieur du véhicule
- 20: : face extérieure de la pièce d'aspect 10
- 30: : face intérieure de la pièce d'aspect 10
- 40: : insert en matériau à mémoire de forme du type agrafe
- 42: : corps de l'insert 40
- 46: : pattes de l'insert 40
- 47: : languettes proximales de l'insert 40
- 48: : ergots 48 du corps 42
- 50: : pièce destinée à être assemblée à la pièce d'aspect 10, et destiné à ne pas être visible depuis l'extérieur du véhicule
- 54: : orifice dans une paroi 56 de la pièce 50
- 56: : paroi de la pièce 50 muni d'un orifice 54
- 100: : ensemble d'une pièce d'aspect 10 et d'une pièce à assembler 50, assemblées au moyen de l'insert 40

## Revendications

1. Pièce d'aspect de carrosserie (10) de véhicule automobile, comportant une face extérieure (20) et une face intérieure (30), la face extérieure (20) étant destinée à être visible depuis l'extérieur du véhicule, la face intérieure (30) étant configurée pour être assemblée à une seconde pièce (50), **caractérisée en ce que** la pièce (10) comporte au moins un insert (40) surmoulé en matériau à mémoire de forme, ledit insert (40) étant du type agrafe.

2. Pièce (10) selon la revendication 1, dans laquelle l'insert (40) comporte un corps (42) formant une surface munie d'au moins une patte (46), le corps (42) étant au moins en partie surmoulé dans l'épaisseur de la face intérieure (30) de la pièce d'aspect (10), et la patte (46) étant saillante par rapport à ladite face intérieure (30).

3. Pièce (10) selon la revendication précédente, dans laquelle le corps (42) comporte des ergots (48) d'ancrage dans la face intérieure (30).

4. Pièce (10) selon l'une des revendications précédentes, dans laquelle l'insert (40) est réalisé dans un matériau différent de celui du reste de la pièce (10).

5. Pièce (10) selon l'une des revendications précédentes, dans laquelle l'insert (40) possède :
- une première configuration permettant un positionnement l'insert (40) sans effort d'assemblage, lorsque l'insert (40) est soumise à une première condition prédéterminée ; et
- une seconde configuration générant des contraintes de serrage lorsque l'insert (40) est soumis à une seconde condition prédéterminée, différente de la première condition.

6. Pièce (10) selon la revendication précédente, dans laquelle la première condition correspond à soumettre l'insert (40) à une température T1, de préférence une température inférieure à -40°C, et la seconde condition correspond à soumettre l'insert (40) à une température T2, avec T1<T2, de préférence T2 correspondant une température ambiante.

7. Pièce (10) selon l'une des revendications 2 à 6, dans laquelle l'extrémité distale de la patte (46) comporte un angle vif et/ou une forme pointue, apte à pénétrer dans la matière au niveau du serrage.

8. Ensemble (100) d'une pièce d'aspect (10) selon l'une des revendications précédentes, et d'une seconde pièce (50), les deux pièces (10, 50) étant assemblées l'une à l'autre au moyen de l'insert (40) en matériau à mémoire de forme.

9. Ensemble (100) selon la revendication 7, dans lequel l'insert (40) comporte un corps (42) formant une surface munie d'au moins une patte (46), et la seconde pièce (50) comporte une paroi (56) munie d'un orifice (54), la patte (46) traversant l'orifice (54), et comportant un coude exerçant une force de serrage sur la paroi (56).

10. Procédé de fabrication d'un ensemble (100) selon l'une des revendications 8 et 9, **caractérisé en ce que** l'on réalise les étapes suivantes :
- on applique la première condition à l'insert (40) ;
- on fabrique la pièce d'aspect (10) par un procédé de moulage tout en surmoulant au moins partiellement l'insert (40) ;
- on positionne l'insert (40) en regard d'au moins un organe de fixation de la pièce (50) à assembler ;
- on applique la seconde condition à l'insert (40).

11. Procédé de fabrication d'un ensemble (100) selon l'une des revendications 8 et 9, **caractérisé en ce que** l'on réalise les étapes suivantes :
- on applique la seconde condition à l'insert (40) ;
- on fabrique la pièce d'aspect (10) par un procédé de moulage tout en surmoulant au moins partiellement l'insert (40) ;
- on applique la première condition à l'insert (40) ;
- on positionne l'insert (40) en regard d'au moins un organe de fixation de la pièce (50) à assembler ;
- on applique la seconde condition à l'insert (40).

12. Procédé selon l'une des revendications 10 ou 11, dans lequel :
- on applique la première condition à l'insert (40) en appliquant une température T1 à l'insert (40), de préférence une température T1 inférieure à -40°C ; et
- on applique la seconde condition à l'insert (40), en appliquant une température T2 à l'insert (40), avec T1<T2, de préférence la température T2 correspond à une température ambiante.
